# EUROPEAN PATENT APPLICATION

(11) **EP 0 751 497 A1**
(43) Date of publication of application: **02.01.1997**
(21) Application number: 95110176.5
(22) Date of filing: 29.06.1995
(51) Int. Cl.: G11B 5/11

(54) **Magnetic head**

(71) Applicant: Mitsumi Electric Company Ltd., Chofu-shi Tokyo (JP)
(72) Inventor: Inoue, Naoto, c/o Yamagata Mitsumi Co., Ltd., Yamagata-shi, Yamagata (JP); Endo, Mitsuhiro, c/o Yamagata Mitsumi Co., Ltd., Yamagata-shi, Yamagata (JP)
(74) Representative: Grünecker, Kinkeldey, Stockmair & Schwanhäusser Anwaltssozietät

(57) **Abstract**

A plate material (11) for use in processing a shielding case is of three-layer structure in cross section, including Permalloy layers (11a,11c) and a non-magnetic layer (11b) (of copper or copper-nickel alloy) held therebetween. The combination of them is press-bonded into such a three-layer shielding case in cross section having the Permalloy layers and the non-magnetic layer held therebetween.

## Description

### BACKGROUND OF THE INVENTION

### Field of the invention

The present device relates to a magnetic head in, for example, a tape recorder as a magnetic record playback apparatus, and more particularly to a construction resistant to an external magnetic noise in an audio magnetic head.

### Related art

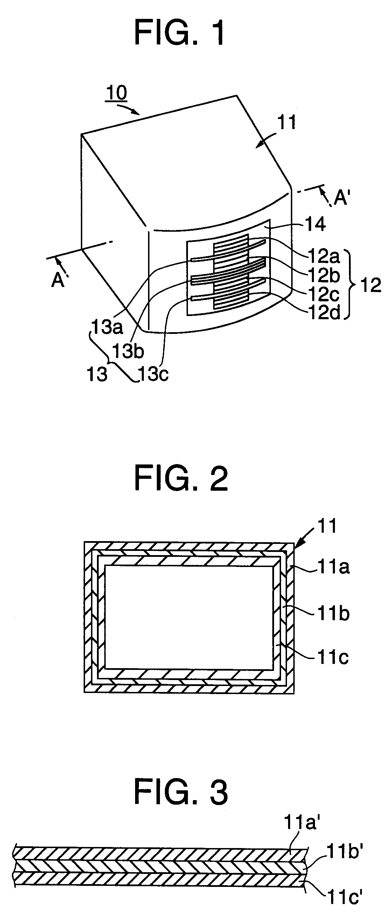

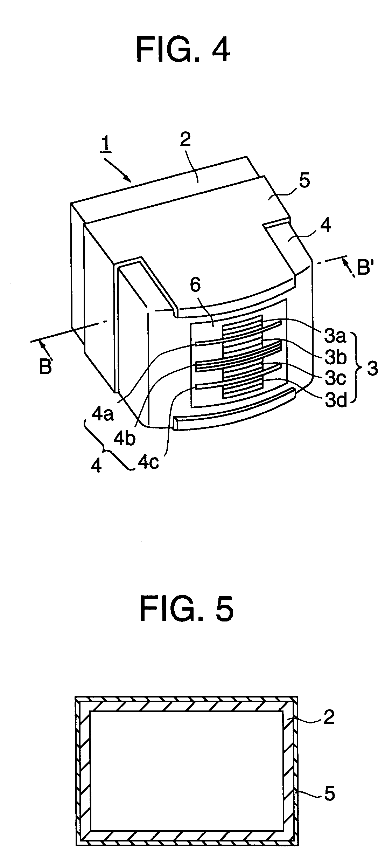

Fig. 4 is a perspective view illustrating the construction of a conventional magnetic head, and Fig. 5 a sectional view of the principal part thereof. As shown in Fig. 1, a magnetic head 1 is provided with a shielding case 2 including head cores 3 and shielding plates 4 fitted in the case and secured therein with filler resin 6.

In order to increase the shielding effect, a known magnetic head is constructed so that a shielding cover 5 is additionally fitted to the outer face of a shielding case 2 afterward.

In this case, the shielding case 2 and the shielding cover 5 are formed of Permalloy so as to seek shielding properties against a low-frequency magnetic noise.

Since only Permalloy is used for shielding purposes in the conventional magnetic head 1, however, the shielding properties against a high-frequency magnetic noise and magnetic waves have been insufficient, though those against a low-frequency magnetic noise have been prominent. Therefore, the shielding properties in question still remain insufficient in such an environment that a high-frequency external electromagnetic field frequently acts thereon, thus causing a problem to arise from deteriorating the S/N ratio.

Moreover, the manday required to fit the shielding covers 5 to the outer sides of the shielding cases 2 one after another results in not only increasing the number of parts but also necessitating the production and management of individual parts.

### SUMMARY OF THE INVENTION

In view of the foregoing problems arising from a magnetic noise shielding mechanism including a shielding case and a shielding cover for a magnetic head as set forth above, an object of the present device is to provide a magnetic head having shielding properties against an external magnetic noise without necessitating such a shielding cover.

In order to accomplish the object above, a magnetic head embodying the present device is provided with a shielding case of three-layer structure comprising Permalloy layers with a non-magnetic layer held therebetween.

According to the present device, the magnetic head is provided with the shielding case of three-layer structure comprising: a first Permalloy layer as the outer layer of the case, a third Permalloy layer as the inner layer thereof, and a second non-magnetic layer as an intermediate layer. As a result, the effect of shielding a low-frequency magnetic noise is heightened by the Permalloy layers and that of shielding a high-frequency magnetic noise is heightened by the non-magnetic layer at the same time.

### BRIEF DESCRIPTION OF THE DRAWINGS

Fig. 1 is a perspective view of a magnetic head embodying the present device;
Fig. 2 is a sectional view taken of line A - A' of Fig. 1 with the omission of the internal construction of the magnetic head according to the present device;
Fig. 3 is an enlarged sectional view of a plate material constituting the shielding case of the magnetic head according to the present device;
Fig. 4 is a perspective view of a conventional magnetic head;
Fig. 5 is a sectional view taken on line B - B' of Fig. 4 with the omission of the internal construction of the conventional magnetic head.

### DETAILED DESCRIPTION OF THE PREFERRED EMBODIMENTS

Referring to the drawings, an embodiment of the present device will be described.

As shown in a perspective view of Fig. 1, a sectional view of the principal part of Fig. 2 and a sectional view of a plate material of Fig. 3, a magnetic head 10 embodying the present device structurally comprises head cores 12, and a shielding case 11 with shielding plates 13 internally secured with filler resin 14.

Moreover, the shielding case 11 is of three-layer structure comprising: a first Permalloy layer 11a as the outer layer of the case, a third Permalloy layer 11c as the inner layer thereof, and a second non-magnetic metal layer 11b of, for example, copper or copper-nickel alloy as an intermediate layer.

The Permalloy layers 11a, 11c make available shielding properties against a low-frequency magnetic noise, whereas the non-magnetic layer 11b make available shielding properties against a high-frequency magnetic noise.

This embodiment of the present device features in that, as shown in the sectional view of a plate material of Fig. 3 for use in processing the shielding case 11, the plate material as a cladding material of three-layer structure comprising a Permalloy layer 11a', a non-magnetic layer (of copper or copper-nickel alloy) 11b' and a Permalloy layer 11c' is processed by press-bonding into such a three-layer shielding case in cross section of Fig. 2.

The present device is similar to the prior art in the respect that press bonding is employed. In other words, it is unnecessary to alter the conventional processing technique as long as the cladding plate material for use is produced in three-layer structure.

Since the use of the three-layer cladding material formed with the outer layers made of the same kind of metal and the inner layer made of a different kind of metal prevents the material from cracking because of the difference in malleability therebetween when it is press-bonded, thus allowing it to be pressed into shapes satisfactorily in comparison with what is of two-layer structure.

Since the magnetic head 10 according to the present device has the non-magnetic layer 11b formed over the whole the shielding case 11, moreover, the obtainable surface area of the non-magnetic layer of the magnetic head 10 is greater than what is obtainable from the conventional magnetic head 1, so that shielding properties against an external magnetic noise is made improvable thereby.

The magnetic head according to the present device is equivalent in construction to what is equipped with a shielding cover through the same process step of press-bonding the shielding case as the step taken in the prior art. Thus the number of parts can be decreased with the effect of shielding the external magnetic noise.

Further, the use of the three-layer plate material including the Permalloy layers and the non-magnetic layer held therebetween for what is intended to process the shielding cover prevents the curved portion of the plate material from cracking when it is press-bonded.

## Claims

1. A magnetic head comprising:
a shielding case having a multi layer including:
a pair of permalloy layers, one being confronted to an outside of said magnetic head and the other serving as an outer surface of said shielding case; and
a non-magnetic layer interposed between said permalloy layers.

2. A magnetic head as claimed in claim 1, wherein said non-magnetic layer is selected from the group consisting of copper and copper-nickel alloy.
